# EUROPÄISCHE PATENTSCHRIFT

(11) **EP 3 259 080 B1**
(45) Veröffentlichungstag und Bekanntmachung des Hinweises auf die Patenterteilung: **16.10.2019**
(21) Anmeldenummer: 15763525.1
(22) Anmeldetag: 03.09.2015
(51) Int. Cl.: B09B 3/00, B09B 5/00, B29B 17/02, B02C 13/18, B02C 13/28

(54) **VORRICHTUNG ZUM TRENNEN VON VERBUNDWERKSTOFFEN UND GEMISCHEN, INSBESONDERE FESTSTOFFGEMISCHEN UND SCHLACKEN**
DEVICE FOR SEPARATING COMPOSITE MATERIALS AND MIXTURES, IN PARTICULAR SOLID-MATERIAL MIXTURES AND SLAGS
DISPOSITIF POUR SÉPARER DES MATÉRIAUX COMPOSITES ET DES MÉLANGES, EN PARTICULIER DES MÉLANGES DE MATIÈRES SOLIDES ET DES SCORIES

(43) Veröffentlichungstag der Anmeldung: 27.12.2017
(60) Teilanmeldung: 19196107.7
(73) Patentinhaber: GRAF, Deniz, 8713 Uerikon (CH)
(72) Erfinder: GRAF, Deniz, 8713 Uerikon (CH)
(74) Vertreter: Patentanwälte Behrmann Wagner PartG mbB
(86) Internationale Anmeldenummer: PCT/EP2015/070159
(87) Internationale Veröffentlichungsnummer: WO 2017/036534

(56) Entgegenhaltungen:
- WO-A1-2006/117065
- WO-A1-2012/073216
- DE-A1- 4 227 308
- DE-A1-102004 001 305
- "Recycling of resources in steel production", recovery, 1. April 2014 (2014-04-01), XP055270703, Gefunden im Internet: URL:http://www.bhs-sonthofen.de/en/industr y-solutions/recycling/slag.html [gefunden am 2016-05-04]

## Beschreibung

Die vorliegende Erfindung betrifft eine Vorrichtung zum Auftrennen, respektive Aufschliessen, und Separieren von Verbundwerkstoffen und Gemischen, insbesondere Feststoffgemischen und Schlacken.

Hierbei gilt es zu beachten, dass die Begriffe Auftrennen, Trennen und Aufschliessen in diesem Kontext die Bedeutung haben, die unterschiedlichen Materialien, welche Teil des Verbundwerkstoffs bzw. des Gemischs sind, voneinander zu lösen, sprich eine Trennung entlang der Kontaktfläche zu bewirken. Aufschliessen beschreibt hier also nicht das Durchführen eines klassischen chemischen Aufschlusses (z.B. in Säure), sondern eben genau das beschriebene Lösen voneinander der unterschiedlichen Materialien (z.B. Holz, Metall, Kunststoff,...) in dem Verbundmaterial bzw. in dem Gemisch. Die Materialien sind anschliessend zwar nicht mehr miteinander verbunden, liegen aber noch immer nicht räumlich getrennt vor. Eine räumliche Trennung der Materialien wird durch die Separation erreicht. Im Anschluss an die Separation, welche eine Art Gruppierung der verschiedenen Materialien beschreibt, werden die einzelnen, separierten Bestandteile, sprich die Wertstoffe, des ursprünglichen Verbundwerkstoffs bzw. des Gemischs erhalten.

Die Problematik der Entsorgung von Abfällen ist hinlänglich bekannt und stellt eine der großen Herausforderungen unserer Zeit dar. Neben den Abfällen, welche in der Herstellung von Verbrauchs- und Wirtschaftsgütern entstehen, sind insbesondere auch Abfälle, welche nach deren Gebrauch (end of live) anfallen, ein zunehmendes Problem mit globalen Auswirkungen auf die Umwelt.

Neben der Abfallproblematik als solche, stellt auch die Versorgung der Industrie mit Rohstoffen aufgrund von Verknappung eine zusätzliche Verschärfung des Problems dar. Man kann hier von einem künftigen Versorgungs-Entsorgungsproblem sprechen. Die daraus resultierenden Rückkoppelungseffekte können unsere Gesellschaft vor schnell wachsende Herausforderungen stellen. Mit einer konsequenten und energieeffizienten Kreislaufwirtschaft der Rohstoffe kann dieses Problem massiv entschärft werden.

Ein starker Anstieg des Einsatzes von Verbundwerkstoffen trägt ebenfalls zur Erschwerung der Kreislaufwirtschaft bei. Als Verbundwerkstoff bezeichnet man einen Werkstoff, welcher aus zwei oder mehreren verbundenen Werkstoffen besteht und im Vergleich zu den einzelnen Komponenten unterschiedliche Werkstoffeigenschaften aufweist. Es handelt sich bei Verbundwerkstoffen also um eine Kombination unterschiedlicher Werkstoffe mit verbesserten spezifischen Eigenschaften, wie beispielsweise einem geringen Gewicht bei hoher Festigkeit, oder geringeren Kosten bei gleichen physikalischen Eigenschaften.

Allerdings ist es sehr aufwendig diese Werkstoffe wieder in ihre Bestandteile aufzutrennen und wiederzuverwerten. Aus diesem Grund wird der grösste Teil thermisch entsorgt, sprich verbrannt. Dies führt allerdings zum Verlust der darin enthaltenen Rohstoffe.

Bei wertstoffhaltigen Verbrauchs- oder Produktionsabfällen, die heute grösstenteils verbrannt oder deponiert werden, handelt es sich beispielsweise um Schlacken bzw. Aluminiumkrätzen, welche Abfallprodukte der Primär- als auch Weiterverarbeitung von Metallen wie beispielsweise Aluminium sind, um Schlacken, welche durch Verbrennung von Müll, insbesondere Hausmüll und Industriereststoffen, entstehen, um Verbundwerkstoffe, wie Elektronik- und Elektroschrott, als auch deren Teilfraktionen, um Aluminium-Sandwichplatten, um Blisterverpackungen usw. Der Grund für die gängige Entsorgungspraxis liegt in der Komplexität der Vermischung und Verbindung der Wertstoffe innerhalb dieser Materialien, wodurch eine saubere Auftrennung in die Bestandteile und somit eine Rückführung in die stofflichen Kreisläufe nicht möglich ist.

Daher werden diese Wertstoffe dem Kreislauf entzogen und müssen durch neu abgebaute Rohstoffe ersetzt werden. Zusätzlich verschärfend kommt hinzu, dass diese Abfälle in grossen Mengen in Schwellen- oder Entwicklungsländer unter schwerwiegenden Folgen verbrannt oder gar in die Ozeane verfrachtet werden.

In Industrieländern werden vorsortierte Abfälle in relativ geringen Mengen, mittels thermischer oder nasschemischer Prozesse, aufgearbeitet. Diese Prozesse sind meist nicht sehr effizient und belasten die Umwelt in erheblichem Masse. Zudem werden Recyclate (rückgewonnene Wertstoffe) meist in ungenügender Qualität und Quantität hergestellt. Es ist hervorzuheben, dass diese Prozesse nebst unerwünschten Emissionen, wie z.B. C0₂ und NOₓ, generell zu erhöhten Belastungen der Umwelt führen. Nur geringe Mengen solcher Materialien werden heute nebst diesen thermischen/chemischen Prozessen in mechanischen Anlagen verarbeitet.

Beispielsweise ist aus WO-A-2006/117065 eine Vorrichtung zum Behandeln von Verbundelementen bekannt, bei welcher der Verbundwerkstoff zerkleinert wird und die zerkleinerten Partikel über einen Zufuhrkanal in eine Aufschliessvorrichtung geleitet werden, wobei sich der Aufschluss der Verbundwerkstoffe durch einen Strömungsabrisses eines Transportfluids ergibt und der Verbundwerkstoff dadurch zwangsläufig eine weitere Zerkleinerung erfährt. Eine weitere Vorrichtung zum Trennen ist aus der DE 10 2004 001 305 A1 bekannt.

Die Aufgabe der vorliegenden Erfindung bestand darin, eine alternative Vorrichtung bereit zu stellen, welche das Aufschliessen bzw. Trennen von Verbundwerkstoffen und Gemischen, insbesondere Feststoffgemischen und Schlacken, in deren werkstoffliche Komponenten ermöglicht, um eine Separation in die einzelnen Bestandteile und deren Rückführung als Rohstoffe in den Wirtschaftskreislauf vorzubereiten.

Die erfindungsgemässe Aufgabe wird durch eine Vorrichtung nach dem Anspruch 1, welche geeignet ist zum Durchführen eines Verfahrens zum Trennen von Verbundwerkstoffen und Gemischen, insbesondere Feststoffgemischen und Schlacken, gelöst. Weitere Ausführungsformen sind in den abhängigen Ansprüchen dargestellt.

Das Verfahren zum Trennen von Verbundwerkstoffen und Gemischen, insbesondere Feststoffgemischen und Schlacken, umfasst das Transportieren des Verbundwerkstoffs bzw. des Gemischs durch eine Trennvorrichtung. Der zu trennende Verbundwerkstoff bzw. das zu trennende Gemisch wird während des Passierens der Trennvorrichtung durch mechanische Impulse angeregt und dadurch getrennt.

Die Trennung, respektive der Aufschluss, erfolgt nicht mittels einer Pulverisierung, einer Zerkleinerung, einer durch Turbulenzen hervorgerufenen Beschleunigung oder dergleichen, sondern durch tribomechanische Wirkung in den Grenzschichtoberflächen. Die Tribomechanik bezeichnet die beim mechanischen Eingriff in dem Gefüge der Grenzflächen fester Körper ablaufenden Mikroprozesse.

Die Anregung erfolgt durch Kontaktimpulse auf das Material. Durch den starken Kontaktimpuls wird ein grosses Frequenzspektrum an Schwingungen in das Material eingebracht, die Frequenzen, die den Eigenfrequenzen entsprechen, werden aufgenommen. Bedingt durch die unterschiedlichen physikalischen Eigenschaften sind dies, je nach Material, unterschiedliche Frequenzen.

Daraus resultiert eine Anregung der miteinander verbundenen Materialien, welche, bedingt durch die unterschiedlichen Eigenschaften, zu hohen partiellen Kräften in den Grenzschichten, respektive entlang der Bindungsflächen der verbundenen Materialien, führen und letztlich eine Trennung der Materialien entlang der Grenzschicht zur Folge haben. Man spricht auch von einem tribomechanischen Aufschluss der Verbundmaterialien, der im Allgemeinen sehr energieeffizient ist.

Beim Verfahren werden die mechanischen Impulse in Form von Kontaktstössen auf den Verbundwerkstoff bzw. das Gemisch übertragen. Dabei werden die mechanischen Impulse in hoher Kadenz im Bereich von 1 kHz bis 10 kHz übertragen.

Ist die Kadenz hoch, so ist der Kontaktimpuls kurz. Kurze Impulse bieten den Vorteil, dass sie über ein breites Spektrum anregen. Somit ist die Chance, dass auch die Eigenfrequenz der zu trennenden Verbundwerkstoffe und Gemische angeregt wird, besonders hoch. In anderen Worten decken die einzelnen Impulse ein breites Frequenzspektrum ab und regen dadurch die Eigenfrequenz der Wertstoffe an. Bei den Impulsen handelt es sich bevorzugt um Dirac-Stösse. Des Weiteren gilt zu beachten, dass sich die entsprechende Frequenz der Impulse, welche hier als Kadenz bezeichnet wird, um nicht mit beispielsweise der Eigenfrequenz verwechselt zu werden, aus den Drehzahlen und den Werkzeugabständen ergibt. Die Kadenz der Kontaktimpulse liegt bevorzugt im Bereich von 50 Hz bis 50 kHz und besonders bevorzugt im Bereich von 250 Hz bis 25 kHz.

In einer weiteren Ausführungsform des Verfahrens wird der Verbundwerkstoff bzw. das Gemisch vorzerkleinert, bevorzugt auf eine Grösse von 5-50 mm.

Zur Vorbereitung der Verbundwerkstoffe und Gemische werden diese einer Zerkleinerung unterzogen, bei der das Material als Input für den Aufschlussprozess auf eine Größe von 1-100 mm, bevorzugt von 5-50 mm, weiter bevorzugt von 8-40 mm reduziert wird, wobei die Größe abhängig ist vom Verbundwerkstoff bzw. Gemisch. Sind die Schichten relativ dünn wie bei einer Blisterverpackung (beispielsweise Aluminiumschicht <40 µm) und die Adhäsionskräfte hoch, so wird das Inputmaterial in einem Zerkleinerer auf eine Größe von ca. 8-12 mm zerkleinert. Bei Materialien mit relativ dicken Schichten (> 300 µm), wie einer Aluminiumverbundplatte, kann eine Vorzerkleinerung auf 30- 40 mm erfolgen.

In einer anderen Ausführungsform des Verfahrens umfasst der Verbundwerkstoff bzw. das Gemisch feste organische und/oder anorganische Verbünde, wie Metall/Metall, Kunststoff/Metall, oder Kunststoff/Kunststoff, jeweils mit oder ohne mineralische Anteile.

Zu den Verbundwerkstoffen zählen beispielsweise Teilchenverbundwerkstoffe, Faserverbundwerkstoffe, Schichtverbundwerkstoffe, Durchdringungsverbundwerkstoffe und Strukturverbundwerkstoffe. Prominente Vertreter der Teilchenverbundwerkstoffe sind zum Beispiel Spanplatten (organisch/polymer), Hartmetall (anorganisch/metallisch) und Polymerbeton (anorganisch/polymer). Zu den Faserverbundwerkstoffen gehören unter anderem Faserzemente (polymer/anorganisch), glasfaserverstärkte Kunststoffe (anorganisch/polymer) und WDC (wood-plastic-composite; Holz/Kunststoff). Verbundplatten, wie Sperrholz (nichtmetallisch/Holz), Sandwichkonstruktionen (z.B. Aluminium/Kunststoff) und Bimetalle (Metall/Metall), sind Beispiele für Schichtverbundwerkstoffe. Eine Untergruppe der Schichtverbundwerkstoffe stellen die Verbundstoffe dar. Sie bezeichnen mindestens zwei verschiedene Werkstoffe, die vollflächig miteinander verbunden sind. Prominente Vertreter sind Verbundstoffverpackungen im Allgemeinen, wie beispielsweise Getränkekartons (Karton/Metall) und Tiefkühlbeutel (Aluminium/Kunststoff) und Blisterverpackungen (Kunststoff/Metall) im Speziellen. Durchdringungsverbundwerkstoffe werden gerne in der Elektrotechnik als Kontaktwerkstoffe eingesetzt und setzen sich zusammen aus Kunststoff oder Metall mit Metall bzw. Metallcarbid. Strukturverbundwerkstoffe bestehen meist aus einem Teil Faser/Gewebe (z.B. Kohlenstofffasern, Aramidfasern, Glasfasern,...) und einem Material, wie beispielsweise Kunstharz (z.B. Epoxidharz), in welches diese eingebettet sind.

In einer zusätzlichen Ausführungsform des Verfahrens handelt es sich bei dem Verbundwerkstoff bzw. dem Gemisch um mindestens eines der folgenden:
Schlacken und/oder Aluminiumkrätzen, welche Abfallprodukte der Primärverarbeitung sowie der Weiterverarbeitung von Metallen, insbesondere Aluminium, sind;
Schlacken, welche durch Verbrennung von Müll, insbesondere Hausmüll und Industriereststoffen, entstehen;
Verbundwerkstoffe, wie Elektronik- und Elektroschrott, sowie deren Teilfraktionen, insbesondere Litzenkabel, Steckerverbindungen und Leiterplatten;
gedruckte Schaltungen bestehend aus einem Gemenge verschiedener Verbundwerkstoffe;
Aluminium-Sandwichplatten;
Blisterverpackungen;
Reifen, insbesondere Autoreifen;
Katalysatoren, insbesondere Autokatalysatoren.

Verbundwerkstoffe und Gemische fallen bei den verschiedensten Prozessen an und werden in den unterschiedlichsten Bereichen eingesetzt. So können Schlacken vom Hochofenprozess, also von der Primärverarbeitung von Metallen, bis zur Müllverbrennung, also dem Ende des Lebenszyklus eines Produkts, anfallen. Industriezweige und Bereiche, in welchen Verbundwerkstoffe und Gemische häufig Anwendung finden sind beispielsweise die Automobilindustrie, die Elektroindustrie, die Verpackungsindustrie, das Bau- und Konstruktionsgewerbe etc.

In einer weiteren Ausführungsform des Verfahrens wird der Verbundwerkstoff bzw. das Gemisch mit Hilfe der Schwerkraft zugeführt und legt einen spiralförmigen Weg zurück, welcher die Verweilzeit des Verbundwerkstoffs bzw. des Gemischs im Prozess in Abhängigkeit von Grösse, Gewicht und Form des Verbundwerkstoffs bzw. des Gemischs bestimmt.

Diese Art der Zufuhr ist zum einen energiesparend, zum anderen ermöglicht sie eine Vortrennung der unterschiedlichen zugeführten Verbundwerkstoffe und Gemische. Werden die Verbundwerkstoffe und Gemische dann im Anschluss durch die Kontaktimpulse angeregt und folglich in die einzelnen Materialien, aus welchen sie aufgebaut waren, getrennt, so sind auch diese nun aus dem Verbund gelösten Materialien bereits "vorgetrennt" (also nicht mit Materialien vermischt, welche aus Verbundwerkstoffen und Gemischen stammen, die eine andere Verweilzeit im Prozess besitzen), was ihre anschliessende Separation in die einzelnen Bestandteile erleichtert.

In einer anderen Ausführungsform des Verfahrens wird die Verweilzeit des Verbundwerkstoffs bzw. des Gemischs im Prozess zusätzlich durch die Zugabe eines Gasstroms beeinflusst.

Die Zufuhr eines solchen Gasstroms kann die Auswirkung von Grösse, Gewicht und Form des Verbundwerkstoffs bzw. des Gemischs auf die Verweilzeit im Prozess zusätzlich beeinflussen. Wird beispielsweise ein Gegenstrom (sprich der Gasstrom ist entgegen der Zufuhrrichtung des Materials gerichtet) verwendet, so sinken Teilchen (sprich vorzerkleinerte Verbundwerkstoffe/Gemische) mit geringerer Dichte deutlich langsamer ab, wohingegen der Einfluss auf Teilchen gleicher Grösse mit höherer Dichte weniger stark ausfällt. Gleiches gilt für Teilchen identischer Dichte und unterschiedlicher Querschnittsfläche. Der Widerstand der Teilchen steigt mit zunehmendem Querschnitt und der Effekt des Gegenstroms fällt demnach umso stärker aus, je grösser der Querschnitt ist. Wird der Gasstrom nicht entgegen der Zufuhrrichtung des Materials sondern in dieselbe Richtung gerichtet, so kann die Zufuhr der Teilchen beschleunigt werden und die Unterschiede in der Verweilzeit von Teilchen unterschiedlicher Dichte/Querschnitt etc. kann verringert werden.

In einer zusätzlichen Ausführungsform des Verfahrens wird das nach der Trennung des Verbundwerkstoffs bzw. des Gemischs entstandene Material in seine Bestandteile separiert unter Verwendung mindestens eines der folgenden Mittel:
Sieb
Fliessbettseparator
Sichter
Korona Separator
Sedimentationsbehältnis

Das Verfahren hat den grossen Vorteil, dass sich die einzelnen im Verbundwerkstoff befindlichen Materialien in Abhängigkeit der unterschiedlichen physikalischen Eigenschaften, wie Dichte, Elastizität, Duktilität usw. selektiv voneinander trennen lassen, da sie sich während des Prozesses, sprich während des Aufschluss- respektive Trennverfahrens, unterschiedlich verhalten und so in ihrer Struktur und Partikelgrösse variieren.

Im Rahmen der Erfindung liegt eine Vorrichtung zur Durchführung des Verfahrens zum Trennen von Verbundwerkstoffen und Gemischen, insbesondere Feststoffgemische und Schlacken. Besagte Vorrichtung umfasst eine Antriebseinheit zum Antreiben eines mit einer Lager- /Welleneinheit mit einer im Folgenden als X-Achse bezeichneten Drehachse, die im Wesentlichen parallel zur Erdanziehungskraft liegt. Des Weiteren umfasst die Vorrichtung ein Rotorelement, welches verbunden ist mit der Lager- /Welleneinheit und welches Teil einer Rotoreinheit ist. Das Rotorelement selbst weist mindestens ein Rotorwerkzeug und jedes Rotorwerkzeug mindestens eine Rotorwerkzeugkomponente auf. Das Rotorelement ist umgeben von einem Statorelement, welches Teil einer Statoreinheit ist. Das Statorelement selbst weist mindestens ein Statorwerkzeug und jedes Statorwerkzeug mindestens eine Statorwerkzeugkomponente auf. Das Rotorelement und das Statorelement sind im Wesentlichen zylindrisch ausgebildet. Die Vorrichtung umfasst zusätzlich einen Materialeinlass zum Zuführen des Verbundwerkstoffs bzw. des Gemischs oberhalb der Rotor- /Statoreinheit und einen Materialauslass zum Abführen des getrennten Materials unterhalb der Rotor- /Statoreinheit.

In einer Vorrichtung, in welcher der Verbundwerkstoff bzw. das Gemisch als Schüttgut zugeführt wird, wird der Verbundwerkstoff bzw. das Gemisch durch die Werkzeuge innerhalb weniger Millisekunden abrupt beschleunigt (Kontaktimpuls) und wieder abgebremst (Kontaktimpuls). Das Beschleunigen und Abbremsen wird in hoher Frequenz bzw.
Kadenz wiederholt. Dies hat die Anregung der Eigenfrequenzen der unterschiedlichen Materialien, aus welchen sich der Verbundwerkstoff bzw. das Gemisch zusammensetzt, zur Folge. Aufgrund der unterschiedlichen Eigenfrequenzen der Materialien treten grosse Kräfte vor allem an den Materialgrenzflächen auf, welche zu einer Trennung der verschiedenen Materialien voneinander führt.

Prinzipiell könnte die Vorrichtung auch so aufgebaut sein, dass das Statorelement umgeben wäre von dem Rotorelement. Jedoch wäre dann das Rotorelement grösser ausgebildet als das Statorelement, was zur Folge hätte, dass das grössere der beiden Teile von der Antriebseinheit angetrieben werden müsste. Energetisch effizienter ist es, wenn das kleinere und somit meist auch leichtere Teil in Bewegung versetzt wird und das grössere, und somit meist auch schwererer Teil, ruht.

Die Antriebseinheit das Rotorelement antreibend kann dabei z.B. einen Motor-Antrieb oder einen Hydraulik-Antrieb umfassen, angetrieben durch Strom, Solarenergie, Windenergie, Wasserkraft, oder durch Brennstoffe wie Diesel, Benzin, oder Holz.

Die Rotor- wie auch Statoreinheit, lassen sich als Gesamteinheit auswechseln (Schnellwechselsystem). Der eigentliche Werkzeugwechsel erfolgt somit in einer Schnellwechselvorrichtung ausserhalb der Maschine. Die Rotor-, wie auch die Statorwerkzeuge, werden durch das Absenken in dieser Vorrichtung ausgetauscht bzw. ersetzt. Durch dieses Absenken, werden von unten jeweils die neuen Verschleissteile eingeführt und die verschlissenen, verbrauchten Verschleissteile nach oben ausgestossen.

Das Rotorelement ist, vergleichbar einer Turbine, selbststabilisierend gelagert.

Da produktionsbedingt nicht alle Werkzeuge bzw. Werkzeugkomponenten dieselbe Masse besitzen, erfolgt das Positionieren der Werkzeuge bevorzugt computergestützt. Das heisst, dass die einzelnen Werkzeuge (z.B. des Rotorelements) erst ausgewogen werden und ihre Sollposition dann von einem Computer berechnet wird. Ziel ist es, dass die Werkzeuge schliesslich so angeordnet sind, dass keine Unwucht (beispielsweise des Rotorelements) vorhanden ist und dementsprechend kein Auswuchten nötig ist. Der Vorgang der rechnergestützten Soll-Positionsbestimmung kann auch auf Basis der einzelnen Werkzeugkomponenten anstelle der Werkzeuge, welche mehrere Werkzeugkomponenten umfassen können, durchgeführt werden.

Hergestellt sind die Werkzeuge bzw. deren Werkzeugkomponenten bevorzugt aus Metall, insbesondere Gussstahl. Die Werkzeuge bzw. deren Werkzeugkomponenten weisen scharfe Kanten auf, die jedoch im Laufe der Einsatzzeit abstumpfen und abrunden. Ist dieser Alterungsprozess zu weit fortgeschritten und beeinträchtigt die Qualität der Trennung der Verbundwerkstoffe und Gemische, so müssen sie ersetzt bzw. ausgetauscht werden.

In einer erfindungsgemässen Ausführungsform der Vorrichtung erfolgt die Anregung des Verbundwerkstoffs bzw. des Gemischs durch mechanische Impulse in einem freigegebenen Abstand zwischen dem mindestens einen Rotorwerkzeug und dem mindestens einen Statorwerkzeug.

Der vorzerkleinerte Verbundwerkstoff bzw. das vorzerkleinerte Gemisch, auch Schüttgut genannt, werden über den Materialeinlass der erfindungsgemässen Vorrichtung zugeführt und gelangen in die Zwischenräume zwischen den an dem Rotor- und dem Statorelement angeordneten Werkzeuge. In diesen Zwischenräumen erfolgt dann die Übertragung der mechanischen Impulse auf den Verbundwerkstoff bzw. das Gemisch durch abruptes Beschleunigen und Abbremsen der sich im Prozess befindlichen Teilchen (sprich vorzerkleinerte Verbundwerkstoffe/Gemische).

Bei der Vorrichtung sind das mindestens eine Rotorwerkzeug und die mindestens eine Rotorwerkzeugkomponente im Wesentlichen in Richtung der X-Achse ausgerichtet. Die X-Achse beschreibt die Drehachse der Lager-/Welleneinheit und liegt im Wesentlichen parallel zur Erdanziehungskraft. Die X- Richtung spannt mit der tangentialen Richtung des Statorelements an der Position der mindestens einen Statorwerkzeugkomponente eine Ebene A auf und die X- Richtung spannt mit der radialen Richtung des Statorelements an der Position der mindestens einen Statorwerkzeugkomponente eine Ebene B auf. Die mindestens eine Statorwerkzeugkomponente ist relativ zur X-Achse sowohl in Ebene A als auch in Ebene B ausrichtbar.

Die Ausrichtbarkeit der mindestens einen Statorwerkzeugkomponente relativ zur X-Achse und somit auch relativ zu der mindestens einen Rotorwerkzeugkomponente, welche im Wesentlichen parallel in Richtung der X-Achse ausgerichtet ist, ermöglicht das Auslegen der Vorrichtung auf unterschiedlichste Materialien. Im Prozess können dadurch materialspezifische Bedingungen erreicht werden.

Beschrieben ist hier in erster Linie die Ausrichtung der mindestens einen Statorwerkzeugkomponente relativ zur X- Achse, jedoch könnte auch die mindestens eine Rotorwerkzeugkomponente relativ zur X-Achse ausgerichtet werden und die mindestens eine Statorwerkzeugkomponente im Wesentlichen in Richtung der X-Achse, also in X-Richtung, ausgerichtet sein. Es könnten auch beide Werkzeugkomponenten (Stator und Rotor) relativ zur X-Achse justierbar sein.

Am Vorteilhaftesten ist jedoch die in erster Linie beschriebene Ausführungsform, in welcher nur die Statorwerkzeuge ausgerichtet werden, da sie für eine möglichst lange Lebensdauer sowohl der Stator-, als auch der Rotoreinheit sorgt. Die Rotoreinheit ist bereits zusätzlichen Belastungen und zusätzlichem Verschleiss ausgesetzt, da sie während des Prozesses in Bewegung ist. Werden die Werkzeugkomponenten der Rotoreinheit verstellt, so bedeutet dies, dass das Rotorelement zusätzliche bewegliche Komponenten umfassen würde, welche die Anfälligkeit des Rotorelements in Bezug auf Materialermüdung, Ausfall etc. erhöhen könnten. Eine Verteilung der potentiellen Schwachstellen auf das Rotor- und Statorelement kann eine Erhöhung der Lebensdauer dieser beiden Elemente bewirken.

In einer anderen erfindungsgemässen Ausführungsform der Vorrichtung liegt ein Winkel α, welcher die Ausrichtung in der Ebene A zur X-Achse beschreibt, bevorzugt zwischen - 45° und + 45° und ein Winkel β, welcher die Ausrichtung in der Ebene B zur X-Achse beschreibt, bevorzugt zwischen - 10° und + 10°.

Werden die Winkel wie oben beschrieben eingestellt, so kann ein optimales bzw. besonders gutes Trennergebnis für beinahe jeden Verbundwerkstoff bzw. für jedes Gemisch erzielt und individuell justiert werden. Gleichzeitig wird die Vorrichtung verschleissarm betrieben, sprich die Materialbeanspruchung der Stator- und Rotorwerkzeuge ist verringert bei gleichzeitigem Erzielen eines guten Trennergebnisses. In einer besonders bevorzugten Ausführungsform der Vorrichtung liegt der Winkel α bevorzugt zwischen - 35° und + 35°, insbesondere zwischen - 25° und + 25° und der Winkel β bevorzugt zwischen - 8° und + 8°, insbesondere zwischen - 5° und + 5°.

In einer zusätzlichen erfindungsgemässen Ausführungsform der Vorrichtung besitzt die Vorrichtung eine Dosiervorrichtung für den Verbundwerkstoff bzw. das Gemisch, welche dem Materialeinlass vorgelagert ist und die Zufuhr des Verbundwerkstoffs bzw. des Gemischs mittels Schwerkraft und einer spiralförmigen Bewegung ermöglicht.

Da ein kontinuierlicher Betrieb der Vorrichtung besonders vorteilhaft ist, sollte auch die Zuführung des zu trennenden Verbundwerkstoffs bzw. Gemischs kontinuierlich erfolgen. Im Falle einer kontinuierlichen Zufuhr ist es von Vorteil, wenn das zugeführte Ausgangsmaterial (Verbundwerkstoff/Gemisch) dosierbar ist. Die Materialzufuhr kann dann der Art des Verbundwerkstoffs bzw. des Gemischs, der Verweilzeit des Verbundwerkstoffs bzw. des Gemischs im Prozess etc. angepasst werden.

In einer weiteren erfindungsgemässen Ausführungsform der Vorrichtung ist dem Rotor- /Statorelement mindestens eines der folgenden Mittel nachgelagert:
Sieb
Fliessbettseparator
Sichter
Korona
Separator
Sedimentationsbehältnis

Nach dem Aufschluss bzw. der Trennung der Materialien, welche zuvor Teil des Verbundwerkstoffs bzw. des Gemischs waren, in der Vorrichtung, folgt eine Separation in die verschiedenen Bestandteile. Zu diesem Zweck werden bevorzugt Siebe, Fliessbettseparatoren, Sichter, Korona Separatoren und Sedimentationsbehältnisse eingesetzt.

Die Separation in die einzelnen Bestandteile der getrennten Materialien kann jedoch durch verschiedenste Techniken und basierend auf verschiedenen chemischen und physikalischen Eigenschaften erfolgen. So kann eine Separation bedingt durch unterschiedliche Teilchengrössen (z.B. Sieb), aber auch durch Unterschiede in Dichte und Trägheit (z.B. Sichter) erfolgen. Auch kann die Separation elektrostatisch, wie beispielsweise bei der Korona Separation der Fall, erfolgen. Des Weiteren können auch Nass-Separationstechniken angewandt werden, beispielsweise basierend auf unterschiedlichen Löslichkeiten.

Generell können Separationsverfahren thermischer oder mechanischer Natur sein. Thermische Verfahren können dabei z.B. beruhen auf Siedepunkten (Rektifikation, Destillation, Trocknung, Strippen,...) oder Gefrierpunkten (Ausfrieren, "Kristallisation",...), Sublimationsdampfdrücke (Sublimation,...) oder Löslichkeiten (Chromatographie, Waschen, (Feststoff -) Extraktion, Absorption, Adsorption, Elution,...). Mechanische Verfahren basieren beispielsweise auf Oberflächenbenetzbarkeit (Flotation,...), Dichte (Sedimentation, Dekantation, Abscheiden, Zentrifugation, Schwertrübetrennung, Schlämmung,...), Partikelgrösse (Filtration, Rechen, Sieben, Sichten, Membrantrennverfahren, Umkehrosmose,...), Partikelträgheit (Fliehkraftabscheider, Impaktor, Strahlumlenksichter, Freiflugtrennung,...), Magnetisierbarkeit (Magnettrennung, Wirbelstromtrennung,...) und elektrische Beweglichkeit (elektrostatischer Staubabscheider, Korona Separator,...). Darüber hinaus kann eine Separation durch chemische Reaktionen (Ätzen, Elektrolyse, Elektrophorese, Fällung, lonenaustausch, Rösten, Zonenschmelzen, Kupellation, Seigerung,...) erfolgen. Im Weiteren profitiert der nachgeschaltete Separationsvorgang im speziellen von einer unterschiedlichen Materialeigenschaft, der Duktilität. Duktile Materialien werden plastisch verformt und nehmen eine kompakte Kugelstruktur an, die nahezu die Dichte des entsprechenden Stoffes aufweist. Plastische Materialien behalten ihre Struktur mehr oder weniger bei. Diese Charakteristik ermöglicht eine einfachere Separation durch das verwendete Separationsverfahren.

In einer anderen erfindungsgemässen Ausführungsform der Vorrichtung umfasst die Vorrichtung einen Gaseinlass, bevorzugt angeordnet im Bereich des Rotor- /Statorelements.

Ein durch einen Gaseinlass eingetragener Gasstrom, kann beispielsweise die Verweilzeit des Verbundwerkstoffs bzw. des Gemischs im Prozess beeinflussen. Ist der Gaseinlass in der Nähe des Materialeinlasses angeordnet, so kann z.B. die Zufuhr an Verbundwerkstoff bzw. Gemisch beeinflusst werden. Ist der Gaseinlass im Bereich des Rotor- /Statorelements angeordnet, kann die Verweilzeit des Verbundwerkstoffs bzw. des Gemischs in dem freigegebenen Abstand zwischen dem mindestens einen Rotorwerkzeug und dem mindestens einen Statorwerkzeug und somit die Zeitspanne, in welcher mechanische Impulse den Verbundwerkstoff bzw. das Gemisch anregen, beeinflusst werden. Ist der Gaseinlass nach dem Bereich des Rotor- /Statorelement angeordnet, so kann der durch ihn eingelassene Gasstrom Teil des Separationsvorgangs sein. Ist der Gaseinlass in der Nähe des Materialauslass angeordnet, so kann die Geschwindigkeit des Auslassens der separierten Bestandteile beeinflusst werden.

Es wird explizit darauf hingewiesen, dass jede Kombination der vorangegangenen Beispiele und Ausführungsformen oder Kombinationen von Kombinationen Gegenstand einer weiteren Kombination sein können. Nur solche Kombinationen, die zu einem Widerspruch führen würden sind ausgeschlossen.

Anwendungs- und Ausführungsbeispiele der vorliegenden Erfindung werden nachstehend anhand von Figuren noch näher erläutert. Es zeigen
Fig. 1 schematisch ein Verfahren mit der Trennung der Verbindung der Materialien untereinander und der optionalen Separation der getrennten Materialien voneinander;
Fig. 2 schematisch einen möglichen Aufbau der Schlacke bzw. Aluminiumkrätze, welche sowohl bei der Primärverarbeitung als auch bei der Weiterverarbeitung von Metallen, insbesondere Aluminium, entsteht;
Fig. 3 schematisch einen möglichen Aufbau der Schlacke, welche durch Verbrennung von Müll, insbesondere Hausmüll und Industriereststoffen, entsteht;
Fig. 4 schematisch einen möglichen Aufbau eines Verbundwerkstoffs bestehend aus Kupfer und Glasfaserharzen;
Fig. 5 schematisch einen möglichen Aufbau einer Aluminium-Sandwichplatte;
Fig. 6 schematisch einen möglichen Aufbau einer Blisterverpackung;
Fig. 7 schematisch den Aufschlussvorgang;
Fig. 8 schematisch einen möglichen Aufbau einer Vorrichtung zum Auftrennen von Verbundwerkstoffen und Gemischen, insbesondere Feststoffgemischen und Schlacken;
Fig. 9 schematisch den Querschnitt einer möglichen Ausführungsform eines zum Aufschliessen von Verbundwerkstoffen, Schlacken und Gemischen eingesetzten Werkzeuges;
Fig. 10 schematisch die Ebene A, welche die X-Richtung mit der tangentialen Richtung des Statorelements 42 an der Position der mindestens einen Statorwerkzeugkomponente 44 aufspannen und in welcher der Winkel α liegt;
Fig. 11 schematisch die Ebene B, welche die X-Richtung mit der radialen Richtung des Statorelements 42 an der Position der mindestens einen Statorwerkzeugkomponente 44 aufspannen und in welcher der Winkel β liegt.

Die folgenden Ausführungsformen sind Beispiele und dienen nicht dazu, die Erfindung in irgendeiner Form einzuschränken.

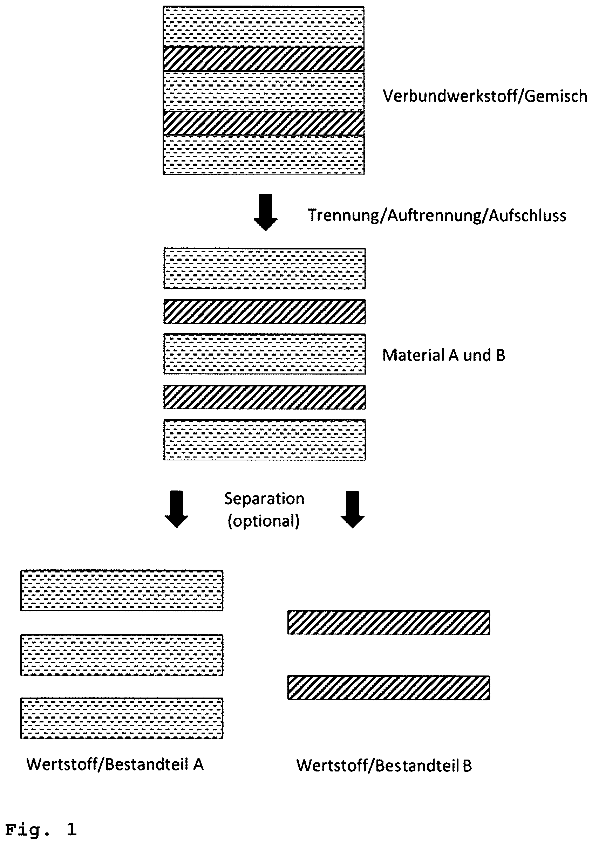

Figur 1 zeigt schematisch die verschiedenen Schritte einer Ausführungsform des Verfahrens. Als erstes wird die Verbindung an den Kontaktflächen der unterschiedlichen Materialien des Verbundwerkstoffs bzw. des Gemischs getrennt (sprich aufgetrennt bzw. aufgeschlossen) und anschliessend können optional die unterschiedlichen Materialien voneinander separiert werden um den sortenreinen Wertstoff (sprich die ursprünglichen Bestandteile des Verbundwerkstoffs/Gemischs) zurück zu gewinnen.

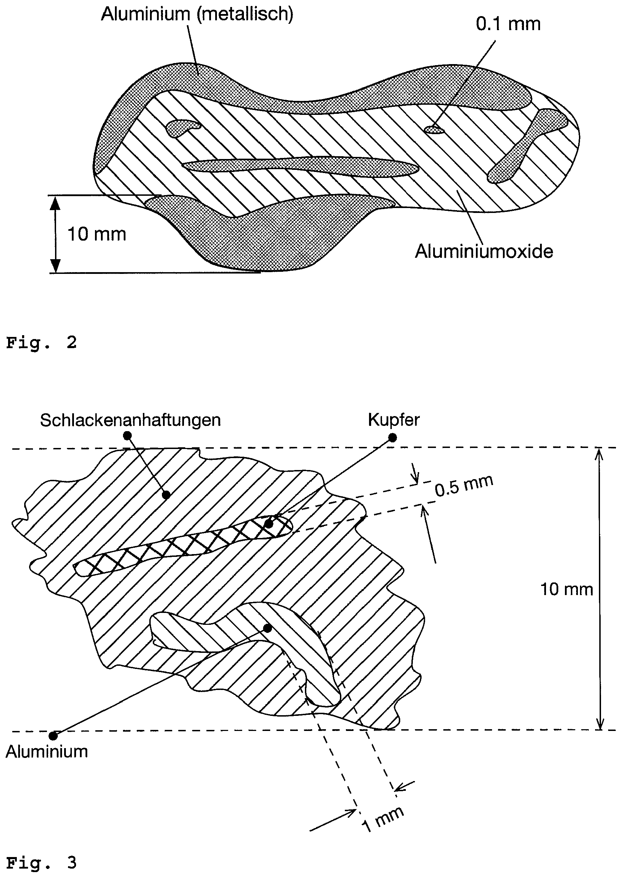

In Figur 2 dargestellt ist ein möglicher Aufbau der Abfallprodukte Schlacke bzw. Aluminiumkrätze, welche sowohl bei der Primärverarbeitung als auch bei der Weiterverarbeitung von Metallen, insbesondere Aluminium, entstehen. Während eines Reduktionsprozesses, bei welchem beispielsweise Aluminiumoxide zu metallischem Aluminium verarbeitet werden, entsteht vor dem Abguss des Aluminiums auf der Oberfläche eine Schicht, die aus metallischem Aluminium und Aluminiumoxiden besteht. Diese Schicht entsteht durch die Oxidation an der Oberfläche und wird mechanisch abgezogen, also abgekrätzt, daher auch der Name Krätze.

Die Struktur der Krätze ist eine chaotische Anordnung von Aluminium und Aluminiumoxiden wie in Figur 2 dargestellt. In der inhomogenen Schicht kann das Aluminium in Stücken angetroffen werden, welche zwischen einigen Mikrometern bis hin zu einigen Millimetern gross sind. Der Anteil des metallischen Aluminiums beträgt üblicherweise zwischen 25-80%_{Gew}.

In Figur 3 dargestellt ist ein möglicher Aufbau einer Schlacke, welche durch Verbrennung von Müll, insbesondere Hausmüll und Industriereststoffen, entsteht. Diese Art der Schlacke enthält oft, nebst einem mineralischen Gemenge, auch Anteile von Schwer- und Leichtmetallen, welche größtenteils in metallischer Form, also nicht als Oxid, vorliegen.

Typischerweise werden diese Schlacken nach dem Austrag aus dem Verbrennungsprozess und einer Zwischenlagerung, einer Separation mittels Induktionsabscheider (Nichteisenmetalle) und Magnetabscheider (Stahl) zugeführt.

Die aus dem Induktionsabscheider entstammende Fraktion besteht aus Leichtmetallen, hauptsächlich aus Aluminium, aus Schwermetallen, hauptsächlich Kupfer, sowie aus weiteren mineralischen Substanzen.

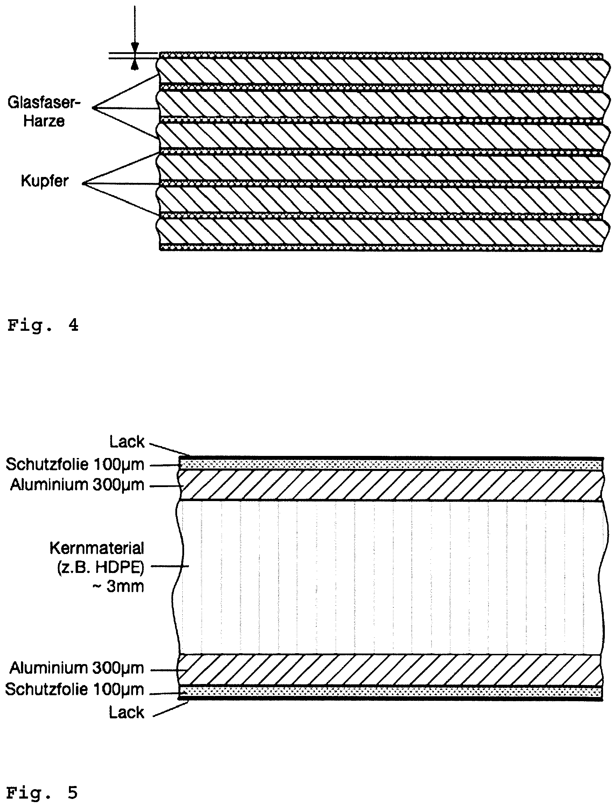

In Figur 4 dargestellt ist ein möglicher Aufbau eines Verbundwerkstoffs bestehend aus Kupfer und Glasfaserharzen. Verbundwerkstoffe wie Elektronik- und Elektroschrotte, aber auch deren Teilfraktionen, wie beispielsweise Litzenkabel, Steckerverbindungen und Leiterplatten bzw. gedruckte Schaltungen bestehend aus einem Gemenge verschiedener Verbundwerkstoffe, enthalten eine Vielzahl wertvoller Metalle und Edelmetalle. Diese aus unterschiedlichen Grössen und Zusammensetzungen bestehenden Materialien sind oft in einer komplexen Struktur "ineinander verwirkt" und gelten als schwer trennbar. So können diese Materialien u.a. aus Vielschichtverbunden (Multilayern) von bis zu 40 Lagen Kupfer von ca. 17 Mikrometern Stärke und Glasfaserepoxidharzen (z.B. FR4) bestehen, wie bildlich dargestellt.

In Figur 5 dargestellt ist ein möglicher Aufbau einer Aluminium-Sandwichplatte bestehend aus zwei Schichten Aluminium von ca. 0.3 mm Stärke, welche meist einseitig lackiert und aussenseitig mit einer Kunststofffolie geschützt sind. Zwischen den Aluminiumschichten befindet sich eine Schicht aus HDPE oder anderen Kunststoffen von ca. 1-8 mm Stärke. Diese Verbundplatten werden u.a. im Fassadenbau oder im Fahrzeugbau eingesetzt. Das Material zeichnet sich insbesondere dadurch aus, dass es sehr beständig und leicht ist.

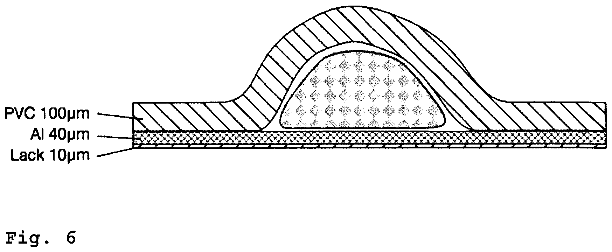

In Figur 6 dargestellt ist ein möglicher Aufbau einer Blisterverpackung, beispielsweise aus dem Medizinalbereich, bestehend aus einer tiefgezogenen Kunststofffolie, meist PVC, und einer bedruckten Aluminiumfolie, welche die PVC- Folie mit dem Hohlkörper (Blister) abdeckt.

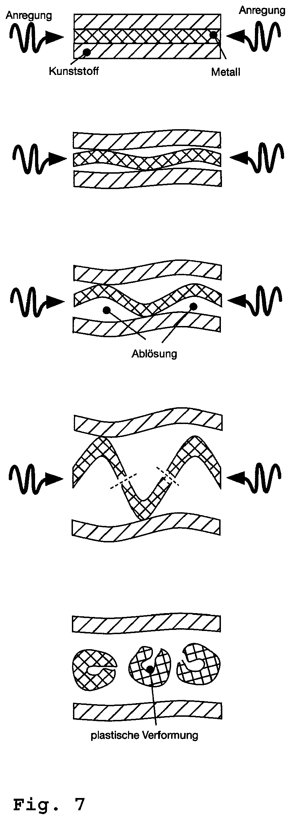

In Figur 7 schematisch dargestellt ist der Aufschlussvorgang, also das Trennen der im Verbundwerkstoff bzw. im Gemisch vorhandenen Materialien. Zu Beginn wird der Verbundwerkstoff bzw. das Gemisch durch mechanische Impulse angeregt. Die verschiedenen Materialien, in diesem Beispiel Kunststoff und Metall, nehmen den Impuls auf und beginnen in ihrer Eigenfrequenz zu Schwingen. An den Materialgrenzflächen treten besonders hohe Kräfte aufgrund der unterschiedlichen Eigenfrequenzen der Materialien auf. Schliesslich erfolgt die Trennung der Materialien entlang der Materialgrenze. Des Weiteren kann die Impulsübertragung aufgrund der unterschiedlichen Duktilität der Materialien, beispielsweise bei Metall, zu einer plastischen Verformung führen. Diese erleichtert das Separieren der Materialien in die einzelnen Bestandteile.

Das Verfahren erfolgt in einer Vorrichtung, in welcher im Wesentlichen das Prinzip der trockenmechanischen Aufbereitung Anwendung findet. Die Idee ist es, die einzelnen Materialien voneinander zu trennen und danach in einzelne Bestandteile zu separieren. Um dies zu bewerkstelligen werden die Unterschiede in den physikalischen Eigenschaften der sich im Gemisch oder aber im Verbundwerkstoff befindlichen Materialien genutzt.

Prinzipiell führen diese unterschiedlichen Eigenschaften zu unterschiedlichem Verhalten der Materialien. Grob kann gesagt werden, dass Kunststoffe oder Kautschuk eher schwingungsdämpfend wirken, viel Energie absorbieren, sich dabei aber elastisch verhalten und wieder in ihre ursprüngliche Form zurückkehren. Metalle hingegen leiten die Schwingungsenergie weiter. Sobald diese sich von anderen Materialien getrennt haben, führen die hohen Impulskräfte zur im Wesentlichen plastischen Deformation respektive "Einkugelung" der Metalle.

Mineralische Stoffe werden aufgrund ihrer Sprödheit richtiggehend pulverisiert.

Nebst der Trennung entlang der Materialoberflächen führt das Verfahren auch zu einer Änderung der Form der einzelnen Partikel. Das heisst, dass sich das Partikelgrössenspektrum in Abhängigkeit der Eigenschaften verändert. Die unterschiedlichen Partikelgrossenverteilungen sind nur teils überlagernd und ermöglichen so erst eine sortenreine Separation in einzelne Bestandteile.

Die sortenrein vorliegenden Bestandteile, sprich Werkstoffe, können dem Wirtschaftskreislauf anschliessend zur Verfügung gestellt werden. Damit werden die Ressourcen geschont und erhebliche Mengen an CO2 eingespart.

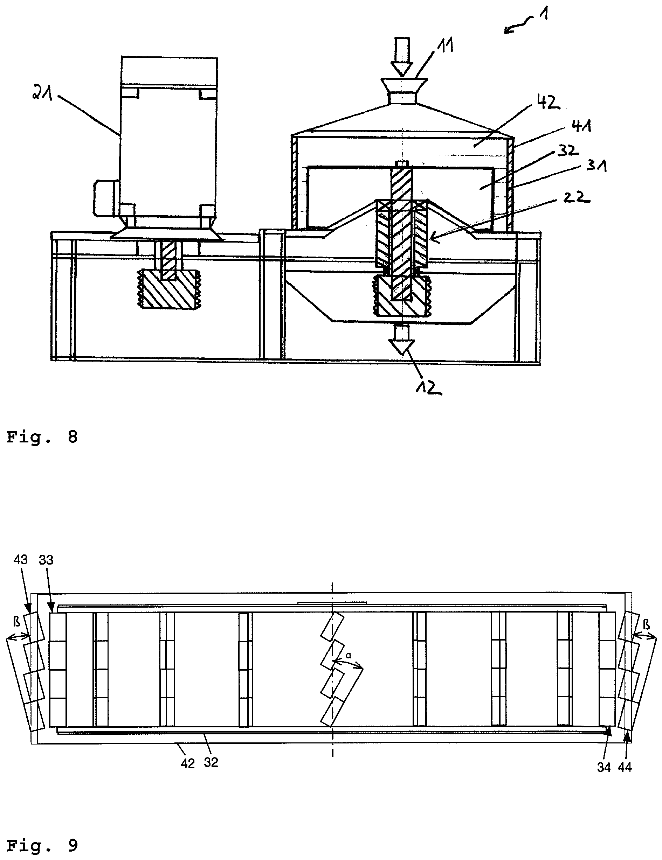

In Figur 8 dargestellt ist ein möglicher Aufbau einer Vorrichtung zum Trennen von Verbundwerkstoffen und Gemischen, insbesondere Feststoffgemische und Schlacken. Auf einem Maschinenunterbau 20 sind eine Antriebseinheit (beispielsweise ein Elektromotor) 21 und eine Lager-/Welleneinheit 22 mit dem dazugehörenden Rotorelement 32 aufgebracht. An diesem Rotorelement 32 befindet sich mindestens ein Rotorwerkzeug 33, welches wiederum Rotorwerkzeugkomponenten 34 umfasst. Ebenso ist eine Statoreinheit 41 mit dem Statorelement 42 und dem mindestens einen dazugehörigen Statorwerkzeug 43, welches wiederum Statorwerkzeugkomponenten 44 umfasst, in diesem Maschinenunterbau angebracht. Die dargestellte Vorrichtung umfasst des Weiteren einen Materialeinlass 11 über welchen das als Schüttgut vorliegende Verbundmaterial etc. zugeführt wird und einen Materialauslass 12 über welchen getrennte Materialien und gegebenenfalls bereits separierte Bestandteile abgeführt werden.

Durch die Zuführung des Materials von oben in die Vorrichtung 1 wird mittels der Schwerkraft und einer spiralförmigen Bewegung das Material nach unten verfrachtet. Auf diesem spiralförmigen Weg erfolgt, in Abhängigkeit der Grösse, Gewicht und Form des Materials, eine unterschiedliche Verweilzeit im Prozess.

In Figur 9 dargestellt ist eine mögliche Ausführungsform des Werkzeuges, welches zum Trennen von Verbundwerkstoffen und Gemischen eingesetzt wird. Es handelt sich sozusagen um einen vergrösserten Ausschnitt der in Figur 8 dargestellten Rotoreinheit 31 und Statoreinheit 41. Besonders deutlich illustriert ist in Figur 9 die Geometrie der Werkzeuge. Der zwischen den Rotorwerkzeugen 33 und den Statorwerkzeugen 43 freigegebene Abstand ist der Bereich in dem im Wesentlichen die Beaufschlagung, sprich der Aufschluss des Materials, erfolgt.

Die mögliche Bandbreite des Winkel α, welcher die Ausrichtung in der in der Ebene A zur X-Achse beschreibt, beträgt bevorzugt -45° bis +45° und der Winkel β, welcher die Ausrichtung in der Ebene B zur X-Achse beschreibt, beträgt bevorzugt zwischen -10° bis 10°. Die Verweilzeit im Prozess, sowie die Art des Kontaktimpulses kann durch eine Einstellung des Winkels der Statorwerkzeuge zu den Rotorwerkzeugen vorgenommen werden. Ebenso lässt sich durch diese Ausrichtung das Verschleissverhalten der Werkzeuge positiv beeinflussen.

Unter Zugabe eines Luftstromes kann die Verweilzeit des Materials zusätzlich beeinflusst werden.

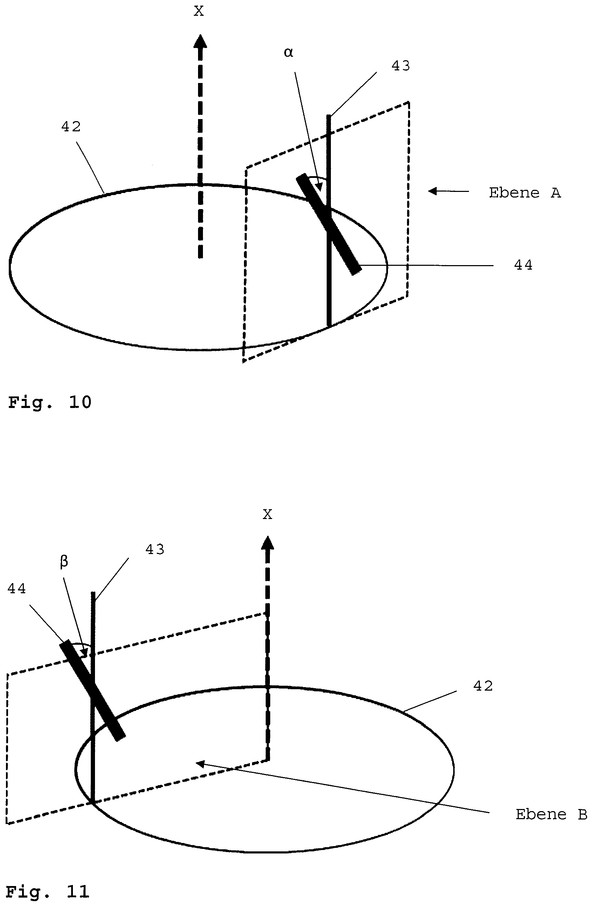

Fig. 10 zeigt schematisch ein Statorelement 42 an welchem ein Statorwerkzeug 43 angeordnet ist, welches wiederum eine Statorwerkzeugkomponente 44 umfasst. Ebenfalls eingezeichnet ist die X-Achse, welche die im Wesentlichen parallel zur Erdanziehungskraft liegende Drehachse der Lager-/Welleneinheit 22 bezeichnet. An der Position, an welcher die Statorwerkzeugkomponente 43 am Statorwerkzeug 43 des Statorelement 42 angeordnet ist, spannt die X- Richtung mit der tangentialen Richtung des Statorelements 42 eine Ebene A auf. Der Winkel α beschreibt die relative Ausrichtung der Statorwerkzeugkomponente in der Ebene A zur X-Achse.

Fig. 11 zeigt schematisch ein Statorelement 42 an welchem ein Statorwerkzeug 43 angeordnet ist, welches wiederum eine Statorwerkzeugkomponente 44 umfasst. Ebenfalls eingezeichnet ist die X-Achse, welche die im Wesentlichen parallel zur Erdanziehungskraft liegende Drehachse der Lager- /Welleneinheit 22 bezeichnet. An der Position, an welcher die Statorwerkzeugkomponente 43 am Statorwerkzeug 43 des Statorelement 42 angeordnet ist, spannt die X- Richtung mit der radialen Richtung des Statorelements 42 eine Ebene B auf. Der Winkel β beschreibt die relative Ausrichtung der Statorwerkzeugkomponente in der Ebene B zur X-Achse.

| Bezugszeichen | Bedeutung |
|---|---|
| 1 | Vorrichtung |
| 11 | Materialeinlass |
| 12 | Materialauslass |
| 21 | Antriebseinheit |
| 22 | Lager-/Welleneinheit |
| 31 | Rotoreinheit |
| 32 | Rotorelement |
| 33 | Rotorwerkzeug |
| 34 | Rotorwerkzeugkomponente |
| 41 | Statoreinheit |
| 42 | Statorelement |
| 43 | Statorwerkzeug |
| 44 | Statorwerkzeugkomponente |
| | |
| X | Drehachse Lager-/Welleneinheit; im Wesentlichen parallel zur Erdanziehungskraft |
| | |
| Ebene A | Ebene, die X-Richtung mit der tangentialen Richtung eines Statorelements aufspannt |
| | |
| Ebene B | Ebene, die X-Richtung mit der radialen Richtung eines Statorelements aufspannt |

## Patentansprüche

1. Vorrichtung zur Durchführung eines Verfahrens zum Trennen von Verbundwerkstoffen und Gemischen, insbesondere Feststoffgemischen und Schlacken, umfassend das Transportieren des Verbundwerkstoffs bzw. des Gemischs durch eine Trennvorrichtung (31, 41; 32, 42), wobei der zu trennende Verbundwerkstoff bzw. das zu trennende Gemisch während des Passierens der Trennvorrichtung durch mechanische Impulse angeregt wird und dadurch getrennt wird, wobei die Vorrichtung (1) eine Antriebseinheit (21) zum Antreiben eines mit einer Lager- /Welleneinheit (22) mit einer im Folgenden als X-Achse bezeichneten Drehachse, die im Wesentlichen parallel zur Erdanziehungskraft liegt, verbundenen Rotorelements (32) umfasst, welches Teil einer Rotoreinheit (31) ist, wobei das Rotorelement (32) selbst mindestens ein Rotorwerkzeug (33) und jedes Rotorwerkzeug (33) mindestens eine Rotorwerkzeugkomponente (34) aufweist, wobei das Rotorelement (32) umgeben ist von einem Statorelement (42), welches Teil einer Statoreinheit (41) ist, wobei das Statorelement (42) selbst mindestens ein Statorwerkzeug (43) und jedes Statorwerkzeug (43) mindestens eine Statorwerkzeugkomponente (44) aufweist, wobei das Rotorelement (32) und das Statorelement (42) im Wesentlichen zylindrisch ausgebildet sind und wobei die Vorrichtung zusätzlich einen Materialeinlass (11) zum Zuführen des Verbundwerkstoffs bzw. des Gemischs oberhalb der Rotor- /Statoreinheit (31, 41) und einen Materialauslass (12) zum Abführen des getrennten Materials unterhalb der Rotor- /Statoreinheit (31, 41) umfasst, **dadurch gekennzeichnet, dass** das mindestens eine Rotorwerkzeug (33) und die mindestens eine Rotorwerkzeugkomponente (34) im Wesentlichen in Richtung der X-Achse, im Folgenden X-Richtung genannt, ausgerichtet sind, die X-Richtung mit der tangentialen Richtung des Statorelements (42) an der Position der mindestens einen Statorwerkzeugkomponente (44) eine Ebene A aufspannt und die X-Richtung mit der radialen Richtung des Statorelements (42) an der Position der mindestens einen Statorwerkzeugkomponente (44) eine Ebene B aufspannt, wobei die mindestens eine Statorwerkzeugkomponente (44) relativ zur X-Richtung sowohl in Ebene A als auch in Ebene B ausrichtbar ist.

2. Vorrichtung nach Anspruch 1, wobei die Anregung des Verbundwerkstoffs bzw. des Gemischs durch mechanische Impulse in einem freigegebenen Abstand zwischen dem mindestens einen Rotorwerkzeug (33) und dem mindestens einen Statorwerkzeug (43) erfolgt.

3. Vorrichtung nach Anspruch 1, wobei ein Winkel α, welcher die Ausrichtung in der Ebene A zur X-Richtung beschreibt, bevorzugt zwischen - 45° und + 45° liegt und ein Winkel β, welcher die Ausrichtung in der Ebene B zur X-Richtung beschreibt, bevorzugt zwischen - 10° und + 10° liegt.

4. Vorrichtung nach einem der Ansprüche 1 bis 3 mit einer Dosiervorrichtung für den Verbundwerkstoff bzw. das Gemisch, welche dem Materialeinlass (11) vorgelagert ist und die Zufuhr des Verbundwerkstoffs bzw. des Gemischs mittels Schwerkraft und einer spiralförmigen Bewegung ermöglicht.

5. Vorrichtung nach einem der Ansprüche 1 bis 4, wobei dem Rotor-/Statorelement (32, 42) mindestens eines der folgenden Mittel nachgelagert ist:
Sieb
Fliessbettseparator
Sichter
Korona Separator
Sedimentationsbehältnis

6. Vorrichtung nach einem der Ansprüche 1 bis 5, wobei die Vorrichtung einen Gaseinlass, bevorzugt angeordnet im Bereich des Rotor-/Statorelements (32, 42), umfasst.

## Claims

1. A device for carrying out a method for separating composite materials and mixtures, in particular solid-material mixtures and slags, comprising the step of transporting the composite material or the mixture through a separating device (31, 41; 32, 42), wherein the composite material to be separated or the mixture to be separated is excited by mechanical impulses as it passes through the separating device and is thereby separated, wherein the device (1) comprises a drive unit (21) for driving a rotor element (32) which is connected to a bearing/shaft unit (22) having an axis of rotation which is hereinafter referred to as the X-axis and which is substantially parallel to the force of gravity, the rotor element (32) being part of a rotor unit (31), the rotor element (32) itself having at least one rotor tool (33) and each rotor tool (33) having at least one rotor tool component (34), the rotor element (32) being surrounded by a stator element (42), which is part of a stator unit (41), the stator element (42) itself having at least one stator tool (43) and each stator tool (43) having at least one stator tool component (44), the rotor element (32) and the stator element (42) being substantially cylindrical and the device additionally comprising a material inlet (11) for supplying the composite material or the mixture above the rotor/stator unit (31, 41) and a material outlet (12) for discharging the separated material below the rotor/stator unit (31, 41), **characterized in that** the at least one rotor tool (33) and the at least one rotor tool component (34) are substantially oriented in the direction of the X-axis, hereinafter referred to as the X-direction, the X-direction and the tangential direction of the stator element (42) together define a plane A at the position of the at least one stator tool component (44), and the X-direction and the radial direction of the stator element (42) together define a plane B at the position of the at least one stator tool component (44), the at least one stator tool component (44) being orientable relative to the X-direction both in plane A and in plane B.

2. The device according to claim 1, wherein the composite material or the mixture is excited by mechanical impulses in a cleared gap between the at least one rotor tool (33) and the at least one stator tool (43).

3. The device according to claim 1, wherein an angle α, which describes the orientation in plane A relative to the X-direction, is preferably between -45° and +45°, and an angle β, which describes the orientation in plane B relative to the X-direction, is preferably between -10° and +10°.

4. The device according to any one of claims 1 to 3, comprising a metering device for the composite material or for the mixture, the metering device being disposed upstream of the material inlet (11) and allowing the composite material or the mixture to be supplied by gravity and in a spiral motion.

5. The device according to any one of claims 1 to 4, wherein at least one of the following means is disposed downstream of the rotor/stator element (32, 42):
sieve
fluidized-bed separator
sifter
corona separator
sedimentation tank.

6. The device according to any one of claims 1 to 5, wherein the device comprises a gas inlet, which is preferably disposed in the area of the rotor/stator element (32, 42).

## Revendications

1. Dispositif pour la mise en oeuvre d'un procédé pour séparer des matériaux composites et des mélanges, notamment des mélanges solides et des scories, comprenant le transport du matériau composite ou du mélange par un dispositif de séparation (31, 41 ; 32, 42), dans lequel le matériau composite à séparer ou le mélange à séparer est excité par des impulsions mécaniques lorsqu'il passe à travers le dispositif de séparation et est ainsi séparé, dans lequel le dispositif (1) comprend une unité d'entraînement (21) pour entraîner un élément rotor (32) relié à une unité de palier/d'arbre (22) ayant un axe de rotation appelé ci-dessous l'axe X qui est essentiellement parallèle à la gravité, l'élément rotor (32) faisant partie d'une unité rotor (31), l'élément rotor (32) lui-même ayant au moins un outil rotor (33) et chaque outil rotor (33) ayant au moins un composant de l'outil rotor (34), l'élément rotor (32) étant entouré par un élément stator (42) qui fait partie d'une unité stator (41), l'élément stator (42) lui-même ayant au moins un outil stator (43) et chaque outil stator (43) ayant au moins un composant de l'outil stator (44), l'élément rotor (32) et l'élément stator (42) étant essentiellement cylindrique et le dispositif comprenant addition- nellement une entrée de matériau (11) pour alimenter le matériau composite ou le mélange au-dessus de l'unité rotor/stator (31, 41) et une sortie de matériau (12) pour décharger le matériau séparé au-dessous de l'unité rotor/stator (31, 41), **caractérisé en ce que** l'au moins un outil rotor (33) et l'au moins un composant de l'outil rotor (34) sont essentiellement orienté en direction de l'axe X appelé ci-dessous la direction X, que la direction X et la direction tangentielle de l'élément stator (42) forment ensemble un plan A à la position de l'au moins un composant de l'outil stator (44) et la direction X et la direction radiale de l'élément stator (42) forment un plan B à la position de l'au moins un composant de l'outil stator (44), l'au moins un composant de l'outil stator (44) étant orientable par rapport à la direction X autant dans le plan A que dans le plan B.

2. Dispositif selon la revendication 1, dans lequel le matériau composite ou le mélange est excité par des impulsions mécaniques dans une distance libérée entre l'au moins un outil rotor (33) et l'au moins un outil stator (43).

3. Dispositif selon la revendication 1, un angle α, qui décrit l'orientation dans le plan A par rapport à la direction X, est de préférence entre -45° et +45°, et un angle β, qui décrit l'orientation dans le plan B par rapport à la direction X, est de préférence entre -10° et +10°.

4. Dispositif selon l'une quelconque des revendications 1 à 3, comprenant un dispositif de dosage pour le matériau de composite ou le mélange qui est disposé en amont de l'entrée de matériau (11) et permet l'alimentation du matériau de composite ou du mélange par gravité ou un mouvement en spirale.

5. Dispositif selon l'une quelconque des revendications 1 à 4, dans lequel au moins un des moyens suivants est disposé en aval de l'élément rotor/stator (32, 42) :
un crible
un séparateur à lit fluidisé
un séparateur à air
un séparateur corona
un réservoir de sédimentation

6. Dispositif selon l'une quelconque des revendications 1 à 5, dans lequel le dispositif comprend une entrée de gaz qui est de préférence disposée dans la zone de l'élément rotor/stator (32, 42).
